# EUROPEAN PATENT SPECIFICATION

(11) **EP 0 621 171 B1**
(45) Date of publication and mention of the grant of the patent: **20.01.1999**
(21) Application number: 94830186.6
(22) Date of filing: 20.04.1994
(51) Int. Cl.: B62K 25/00, B62K 21/02

(54) **Steering and suspension system for vehicles with one steerable wheel, especially for two-wheeled vehicles**
Lenk- und Aufhängungsanordnung für Fahrzeuge mit einem lenkbaren Rad, insbesondere für Zweiradfahrzeuge
Système de direction et de suspension pour véhicules avec une roue directrice, en particulier pour véhicules à deux roues

(30) Priority: 21.04.1993 IT FI930079
(43) Date of publication of application: 26.10.1994
(73) Proprietor: Doveri, Marco, I-56025 Pontedera (Pisa) (IT)
(72) Inventor: Doveri, Marco, I-56025 Pontedera (Pisa) (IT)
(74) Representative: Mannucci, Gianfranco, Dott.-Ing.

(56) References cited:
- EP-A- 0 235 040
- EP-A- 0 236 196
- EP-A- 0 321 803
- EP-A- 0 393 218
- US-A- 4 526 249
- US-A- 4 712 638

## Description

The invention relates to a steering system for the front wheel of a motor vehicle, the hub of which is connected to the suspensions by pivot means which define the steering axis, said axis being suitably inclined to the rear to form the necessary trail.

More particularly, the invention relates to a steering system of the kind including: a handlebar; a supporting member or hub for the front wheel; a suspension to which said supporting member is hinged about a steering axis; and a link assembly connecting said handlebar to said supporting member, said link assembly including a control bar a first end of which is linked to said handlebar by means of a Hook-type joint or equivalent, and a connecting rod a first end of which is hinged via a first pivot having a transverse axis to a second end of said control bar, the second end of said connecting rod being connected to said supporting member via a second pivot having a trasverse axis.

Such a steering system is known from EP-A-0 235 040. In this known system the control bar and the connecting rod are of equal length and are mutually connected by a pivot. The connecting rod is subject to both torsional as well as flexural or bending stresses.

This known steering system is not suitable for use in small-wheeled motorcycles or motor scooters.

Further steering systems have been designed, all of which have several disadvantages, both in term of mechanical complexity as well as in cost of production.

The front suspension of the present-day motor vehicles is generally formed by an elastically telescopic fork supporting the wheel pin on both sides of the wheel. As an alternative, a rigid fork may be employed, whose lower ends carry pivots for two swinging arms supporting the wheel pin. The assembly involves a trailing wheel if the pivots of the swinging arms are ahead of the axle of the wheel and a leading wheel if said pivots are behind it. In other embodiments the suspension is formed on one side only of the wheel to make it easy to remove. Only half the fork remains, and is strong enough to support the swinging arm and the wheel in a side-mounted arrangement.

All these systems have in common the fact that the pivot on which the wheel is steered is located above the wheel on the mid plane of the vehicle inside a tubular member of the frame called, as on bicycles, the headset. This system entails some elasticity in the steering of the wheel, heavy loads on the steering bearings, especially during braking, owing to the height of these bearings off the ground, and large bending moments in the upper part of the frame. This makes it difficult to lighten the system as certain members must have the necessary strength and rigidity.

A number of approaches have been advanced as solutions to these problems, generally employing two superimposed longitudinal arms pivoted to the frame and forming an articulated quadrilateral, one of these arms being approximately level with the axle of the wheel and the other above it; at the end of the lower arm a ball joint is pivoted directly in the wheel hub and at the end of the upper arm a similar joint pivots on a hub extension which projects above the wheel. Both joints have their centre on the mid plane of the wheel and form its steering axis. A variety of methods have been proposed for controlling the steering of the wheel through the handlebars. These methods prove to be highly complex, very expensive and also of no little weight.

The object of the present invention is to solve the problems cited above arising from the conventional fork, but without incurring the complexity and cost of the abovementioned systems. A further object of the present invention is to provide a steering system which can be applied to any motorcycle, and in particular to small-wheeled motorcycles or motor scooters.

These and other objects and advantages, which will become clear to the skilled in the art from the following description, are obtained with a steering system according to claim 1.

When the front wheel is not turned, that is when the motor vehicle is travelling in a straight line, the control bar and the supporting member of the front wheel are essentially parallel to the vertical mid plane of the wheel and the transverse axes of the two pivots are parallel with each other and perpendicular to the vertical mid plane of the wheel. When turning, the control bar can swing with respect to the front wheel supporting member, so that whatever the position of the wheel, the connection between the supporting member and the handelbar are always secure.

In a possible embodiment the first end of said connecting rod is hinged to said control bar via a Hook-type joint forming said first pivot. Alternatively, the second end of said connecting rod is hinged to said supporting member via a Hook-type joint forming said second pivot. In both cases the fork of the Hook-type joint ensures the angular relevant movement between the two transverse axes of the pivots connecting the connecting rod to the control bar and to the supporting member of the front wheel respectively.

In a preferred embodiment, however, the connecting rod is made of two axially connected parts, which are free to angularly move one with respect to the other about an axis parallel to the axis of the connecting rod, and the first part of said connecting rod is hinged to said control bar and the second part is hinged to said supporting member. In particular, said two parts forming said connecting rod may be coaxial. This preferred embodiment allows a reduction of clearance with respect to the embodiment using a Hook joint, since the two parts of the connecting rod have a large sliding and guiding surface.

Advantageously the control bar is longer than the connecting rod and the latter preferably points forward, the end pivoting on the control bar being further forward, with respect to the forward motion of said motor vehicle, than the end pivoting on the supporting member. This provides easily accessible luggage space.

The front wheel may be supported by at least one swinging suspension arm pivoting on the frame about a transerse axis, extending forwards and being located laterally to the front wheel, said swinging arm supporting a pivot on which the front wheel supporting member is pivoted. The front wheel could, however, also be supported by two swinging arms hinged to the frame on cylindrical pivots having substantially transverse axes and to the wheel on ball joints, said ball joints defining the steering axis.

At least one of the suspension arm is provided with a spring-damper system or with some equivalent suspension system, e.g. a torsion bar and a damper.

The swinging arm of the front wheel and the swinging arm of the rear suspension are preferably hinged close to each other on the lower part of the frame. In this way all the stresses caused by the roadway are transmitted to the frame only in its lower part, while the part that extends upwards towards the handlebar can be much lighter than in current frames since it is designed to withstand only stresses coming from the handlebar and not those coming from the roadway.

The upper part of the frame that extends upward to support the handlebar can be constructed in the form of an inverted U, leaving the central part of the vehicle normally occupied by the frame and headset empty. Unoccupied by any structures, this area can then be used - behind the control bar - as a voluminous space for holding luggage or other items.

Further advantageous characteristics of the invention are indicated in the accompanying claims.

A clearer understanding of the invention will be obtained from the description and accompanying drawing, which latter shows a practical non-restrictive illustrative embodiment thereof. In the drawing:
Fig. 1 shows a diagrammatic side elevation of a motor vehicle;
Fig. 2 shows the same in a schematic front elevation;
Figs. 3 and 4 show a cross section taken through the line III-III and a cross section taken through the line IV-IV, respectively, as indicated in Fig. 1, the latter cross section being enlarged;
Figs. 5 and 6 show an enlarged detail of Fig. 1 and a cross section taken through the line VI-VI indicated in Fig. 5, respectively; and
Figs. 7 to 9 show alternative embodiments.

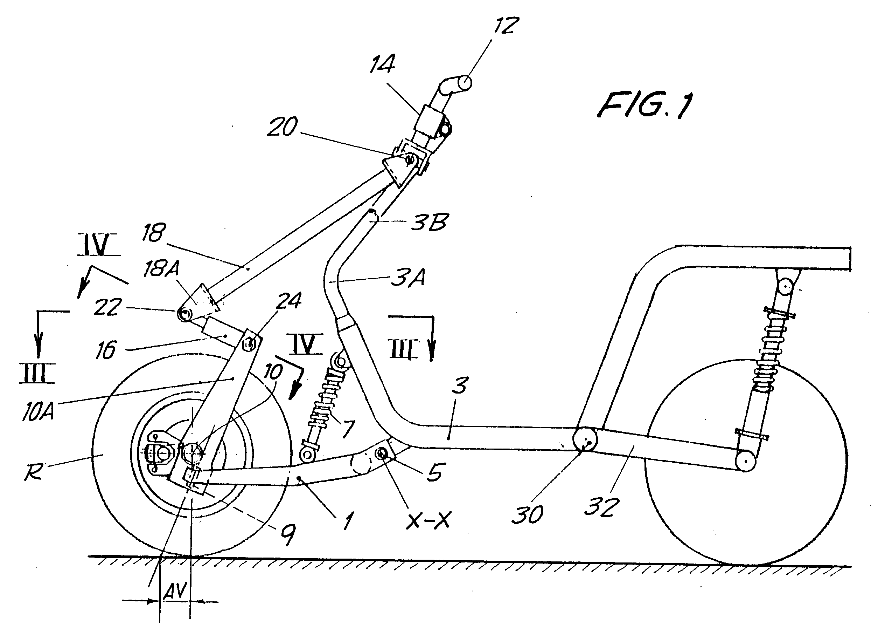

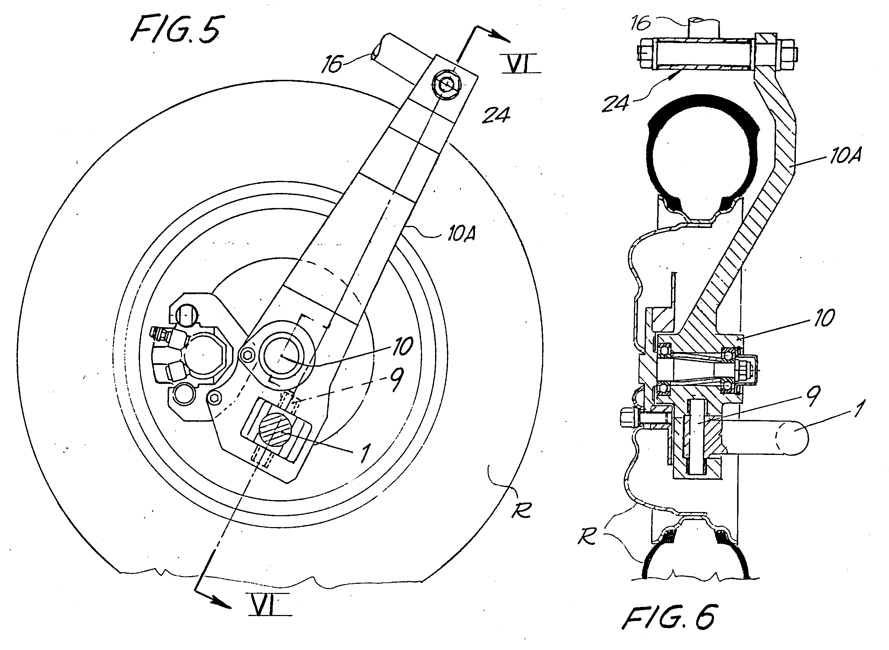

With reference to Figs. 1, 2 and 3, the suspension is formed by an arm 1 pivoting on and swinging with respect to the frame 3 about a transverse axis X-X, with a supporting base - formed by a transverse part 1A and by two hinges 5 a distance apart from each other - that has a certain transverse length and has a lateral portion relative to the front wheel R. Between the frame 3 and the arm 1 an elastic spring-damper system 7 acts. The mobile front end of the arm 1 carries a pin 9 (Fig. 5, 6) whose axis lies in the vertical longitudinal plane of symmetry of the motor vehicle, suitably inclined to provide the necessary trail AV. Pivoting on the pin 9 is the hub 10 of the wheel R. This pin 9 forms the steering axis of the wheel and transmits to the arm 1 the forces and moments generated by the reaction of the ground.

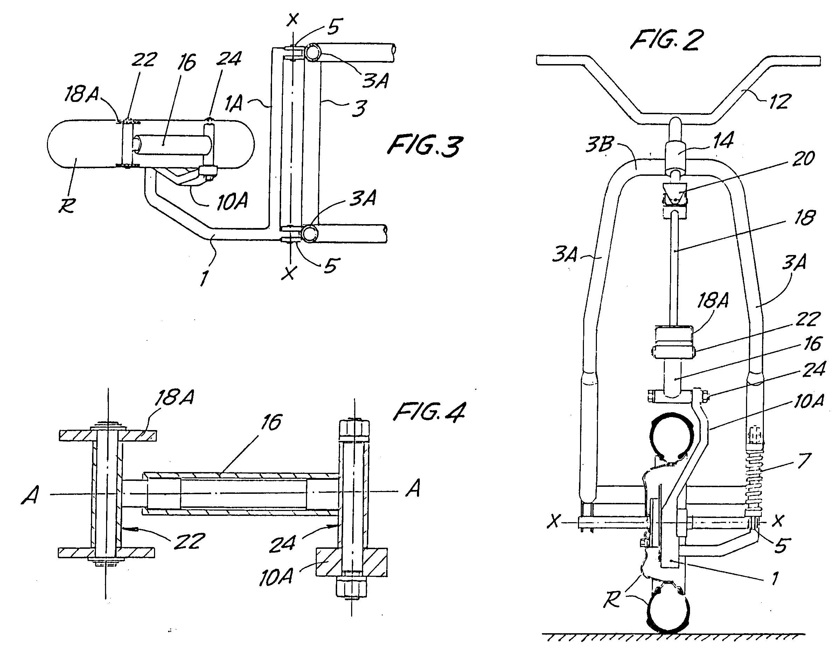

The wheel is steered by an articulated system between the handlebars 12 (rotatable inside the support 14) and a lateral upward extension 10A of the hub 10. The articulated system comprises (in the example shown in Figs. 1 to 6) a connecting rod 16, a control bar 18, 18A and a Hooke-type joint 20 connected directly to the handlebars. A pivot 22 between the connecting rod 16 and the bar 18, and a pivot 24 between the connecting rod 16 and the hub 10 extension 10A, are cylindrical pivots with no appreciable play, and are able rigidly to transmit forces and moments that involve no rotation about their respective axes, which extend essentially transversely when the vehicle is moving in a straight line. Said rotations about the axes of the pivots 22 and 24, together with the rotation of the Hooke-type joint 20, enable the wheel R to oscillate freely through the trajectory imposed upon it by the pivoting arm 1 of the front suspension. By construction, the axes of said cylindrical pivots 22 and 24 are transverse, horizontal and parallel to each other when the steering is in the central position, but have to rotate with respect to each other about the longitudinal axis A-A (Fig. 4) of the connecting rod 16 when the wheel is turned and is oscillating vertically owing to the action of the suspension. This condition, in the possible but not restrictive embodiment illustrated, can be achieved, as shown in Fig. 4, by using a tube-type connecting rod 16 permitting angular movement but not relative sliding. Alternatively, instead of the cylindrical pivot 22 or 24, a Hooke-type joint could be used, or any other joint that would permit the bar 18 to move out of the mid plane of the wheel but would also transmit moments of which the axis is parallel to that of the pin 9 between the bar 18 and the hub 10.

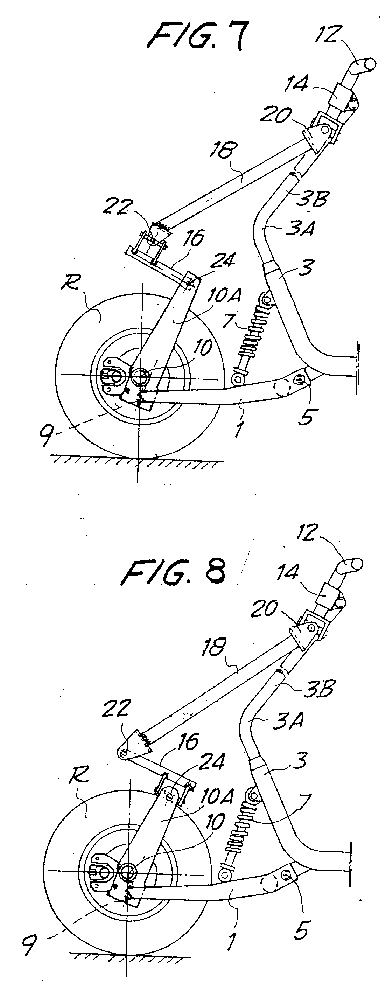

Figs. 7 to and 8 present alternative embodiments of the pivots 22 and 24.

More precisely, in Fig. 7 the connecting rod 16 is connected to the hub 10 extension 10A by a cylindrical pivot 24 similar to that used in the embodiment shown in Figs. 1 to 6. The connection between the connecting rod 16 and the control bar 18, however, is formed in this case by a Hooke-type joint, also labelled 22. The cross-piece of the joint 22 is connected to a fork integral with the bar 18 and to a fork integral with the connecting rod 16. The Hooke-type joint 22 is therefore a pivot of transverse axis between the connecting rod 16 and bar 18 and simultaneously provides a pivot about a longitudinal axis, which replaces the pivot shown in Figs. 1 to 6 of the tube-type connecting rod.

The pivots 22, 24 assume a non-aligned position during steering.

The version shown in Fig. 8 differs from the version of Fig. 7 in that the pivot 22 is a simple hinge (as in Figs. 1 to 5), while the pivot 24 is a Hooke-type joint. The same considerations as applied in Fig. 7 also apply here: in Fig. 8 the bar 18 and the connecting rod 16 can swing with respect to the extension 10A about a longitudinal axis, while the transverse axes of the pivots 22, 24 can adopt a non-aligned position during steering.

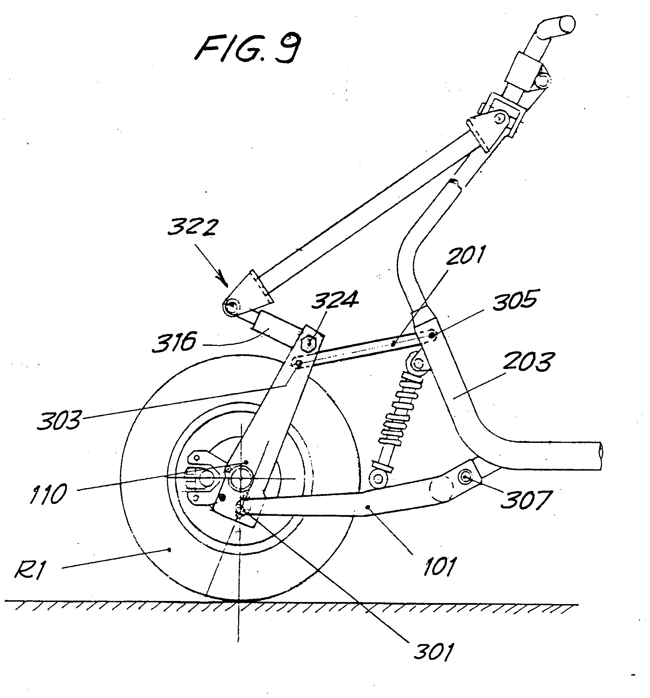

Fig. 9 shows a variant of the suspension, while the articulated system to which the handlebars are connected is similar to that illustrated in Figs. 1 to 6. In Fig. 9, the wheel R1 is provided with an articulated quadrilateral-type suspension 201, 203, 101, 110, in which two of the joints (305, 307) are cylindrical with their axes transverse to the frame, and the other two (301 and 303) are ball joints on the extension of the hub 110 of the wheel R1. The steering axis passes through the centres of said two ball joints. The pivots 322 and 324 meet the same requirements as 22 and 24, and likewise for the connecting rod 316.

Of the main advantages of the embodiments described, the following may be highlighted:
A)- the part of the frame connecting to the joint 5 of the front suspension arm 1 with the joint 30 of the rear suspension 32 is very short and is straight and can therefore easily, economically and with very little weight be made highly rigid, which is an advantage to the steering, because the stresses caused by the roadway do not alter the relative position of the front and rear wheels;
B)- the front wheel R is side-mounted and is therefore easy to remove, but the problem found in present-day suspensions employing a side-mounted wheel and a swinging arm, in which it is practically impossible to move the centre of gravity of the system to the plane of the steering axis, making it difficult to suppress weight-induced moments about the axis of the handlebars, is overcome: with the suspension herein described, the only necessarily eccentric part is the hub part 10A between the interior of the wheel and the pivot 24, but its moment with respect to the pivot 9 can be easily compensated for by the opposite moment of the brake disc or drum and by the wheel disc, thus restoring the centre of gravity more or less to the mid plane of the system;
C)- in its forward part above the pivots of the spring-damper unit 7, the frame 3 can be very light as the only loads it is required to withstand are steering loads and not suspension loads;
D)- the axis of the handlebars 12 can be moved longitudinally because there is no structural connection between said axis of rotation and the frame.

In a preferred embodiment of the invention, in its forward part the frame 3 may consist (Fig. 2) of two lateral elements 3A connected in their upper part by a transverse part 3B to form an inverted U which supports the support 14 of the handlebars 12. This construction avoids any clutter in the central part of the vehicle beneath the handlebars where there is usually a central steering column with the headset, and so leaves plenty of space for luggage. The luggage space may be fitted with a door that can be opened by a person sitting on the motorcycle saddle: the articulated system 10A, 16, 18 is no obstacle to this manoeuvre because the connecting rod 16 points forward, with the bar 18 therefore leading out in front of the handlebars. Nevertheless it is possible for the connecting rod 16 to point in the opposite direction, bringing the pivot 22 towards the frame 3, 3A and hence making the bar 18 more inclined to the horizontal and closer to the frame 3, 3A. In this case the luggage space will have to be located in front of the bar 18 and will be accessible from the front.

It will be understood that the drawing shows a purely illustrative embodiment merely by way of a practical demonstration of the invention, it being possible for the invention to be modified as regards shapes and arrangements without thereby departing from the scope of the claims. The purpose of any reference numerals in the accompanying claims is purely to facilitate the reading of the claims with reference to the description and to the drawing, and does not limit the scope of protection represented by the claims.

## Claims

1. A steering system for the front wheel (R, R1) of a motor vehicle having a single front steering wheel, including: a handlebar (12); a supporting member (10A; 110) for the front wheel; a suspension (1, 7, 101, 201) to which said supporting member (10A; 110) is hinged such as to be pivotable about a steering axis; and a link assembly (16, 18, 20) connecting said handlebar (12) to said supporting member (10A), said link assembly including a control bar (18) a first end of which is linked to said handlebar (12) by means of a Hook-type joint or equivalent (20), and a connecting rod (16) having a longitudinal axis (A-A), a first end of which is hinged via a first pivot (22), having an axis transverse to the vertical mid plane of the wheel (R; R1), to a second end of said control bar (18), the second end of said connecting rod (16) being connected to said supporting member (10A; 110) via a second pivot (24) having an axis transverse to the vertical mid plane of the wheel (R; R1); characterized in that said first pivot (22) and said second pivot (24) are mutually connected by said connecting rod (16) in such a way that during steering the axes of said pivots can oscillate one with respect to the other about an axis extending substantially parallel to the longitudinal axis (A-A) of said connecting rod (16).

2. Steering system according to claim 1, characterized in that said connecting rod (16) is made of two axially connected parts, which are free to angularly move one with respect to the other about an axis parallel to the axis of the connecting rod, and that the first part of said connecting rod is hinged to said control bar (18) and the second part is hinged to said supporting member (10A; 110).

3. Steering system according to claim 2, characterized in that said two parts of said connecting rod (16) are coaxial.

4. Steering system according to claim 1, characterized in that the first end of said connecting Hook-type joint forming said first pivot (22).

5. Steering system according to claim 1, characterized in that the second end of said connecting rod (16) is hinged to said supporting member (10A; 110) via a Hook-type joint forming said second pivot (24).

6. Steering system according to one or more of the preceding claims, characterized in that said control bar (18) is longer than said connecting rod (16).

7. Steering system according to one or more of the preceding claims, characterized in that the connecting rod (16) points forward, the end pivoting on the control bar (18) being further forward, with respect to the forward motion of said motor vehicle, than the end pivoting on the supporting member (10A; 110).

8. Steering system according to one or more of the preceding claims, characterized in that the front wheel (R; R1) is supported by at least one swinging suspension arm (1; 101) pivoting on the frame (3; 203) about a transverse axis (X-X), extending forwards and being located laterally to the front wheel (R; R1), said swinging arm (1; 101) supporting a pivot (9; 301) on which the pivot (10) of the wheel (R; R1) pivots.

9. Steering system according to claim 8, characterized in that said wheel (R1) is supported by two swinging arms (101, 201) hinged to the frame (203) on cylindrical pivots (305, 307) having substantially transverse axes and to the wheel (R1) on ball joints (301, 303), said ball joints defining the steering axis.

## Patentansprüche

1. Lenksystem für das Vorderrad (R, R1) eines Kraftfahrzeugs, das ein einziges gelenktes Vorderrad aufweist, mit einer Lenkstange (12); einem Radträger (10A; 110) für das Vorderrad; einer Aufhängung (1, 7, 101, 201), an welcher der Radträger (10A; 110) so angelenkt ist, daß er um eine Lenkachse drehbar ist; und einem Gestänge (16, 18, 20), das die Lenkstange (12) mit dem Radträger (10A) verbindet, wobei das Gestänge eine Steuerstange (18), deren eines Ende an den Lenker (12) mittels eines Kardangelenks (20) oder eines äquivalenten Bauteils angelenkt ist, und eine Verbindungsstange (16) mit einer ersten Längsachse (A-A) aufweist, deren erstes Ende über ein erstes Gelenk (22) mit einer Achse quer zur vertikalen Mittelebene des Rades (R, R1) an das zweite Ende der Steuerstange (18) angelenkt ist, das zweite Ende der Verbindungsstange (16) über ein zweites Gelenk (24) mit einer Achse quer zur vertikalen Mittelebene des Rades (R; R1) mit dem Radträger (10A; 110) verbunden ist; dadurch **gekennzeichnet,** daß das erste Gelenk (22) und das zweite Gelenk (24) miteinander durch die Verbindungsstange (16) so verbunden sind, daß während des Lenkens die Achsen dieser Gelenke relativ zueinander um eine Achse oszillieren können, die sich im wesentlichen parallel zur Längsachse (A-A) der Verbindungsstange (16) erstreckt.

2. Lenksystem nach Anspruch 1,
dadurch **gekennzeichnet,** daß die Verbindungsstange (16) aus zwei axial verbundenen Teilen besteht, die sich zueinander um eine Achse parallel zur Achse der Verbindungsstange frei drehen können, und daß der erste Teil der Verbindungsstange an die Steuerstange (18) und der zweite Teil an den Radträger (10A; 110) angelenkt ist.

3. Lenksystem nach Anspruch 2,
dadurch **gekennzeichnet,** daß die zwei Teile der Verbindungsstange (16) koaxial sind.

4. Lenksystem nach Anspruch 1,
dadurch **gekennzeichnet,** daß das erste Ende der Verbindungsstange (16) über ein Kardangelenk, welches das erste Gelenk (22) bildet, an die Steuerstange (18) angelenkt ist.

5. Lenksystem nach Anspruch 1,
dadurch **gekennzeichnet,** daß das zweite Ende der Verbindungsstange (16) über ein Kardangelenk, das das zweite Gelenk (24) bildet, an den Radträger (10A; 110) angelenkt ist.

6. Lenksystem nach einem oder mehreren der vorstehenden Ansprüche,
dadurch **gekennzeichnet,** daß die Steuerstange (18) länger als die Verbindungsstange (16) ist.

7. Lenksystem nach einem oder mehreren der vorstehenden Ansprüche,
dadurch **gekennzeichnet,** daß die Verbindungsstange (16) nach vorne weist, wobei das Ende, welches um die Steuerstange (18) dreht, bezogen auf die Vorwärtsbewegung des Fahrzeuges weiter vorne liegt als das Ende, welches um den Radträger (10A; 110) dreht.

8. Lenksystem nach einem oder mehreren der vorstehenden Ansprüche,
dadurch **gekennzeichnet,** daß das Vorderrad (R; R1) durch wenigstens einen schwingenden Aufhängungsarm (1; 101) gehalten ist, der am Rahmen (3; 203) um die Querachse (X-X) dreht, sich nach vorne erstreckt, und seitlich vom Vorderrad (R; R1) angeordnet ist, wobei der schwingende Arm (1; 101) einen Lagerzapfen (9; 301) trägt, um den das Drehgelenk (10) des Rades (R; R1) dreht.

9. Lenksystem nach Anspruch 8,
dadurch **gekennzeichnet,** daß das Rad (R1) von zwei Schwingarmen (101, 201) gehalten wird, die über zylindrische Drehzapfen (305, 307) mit im wesentlichen querliegenden Achsen an dem Rahmen (203) angelenkt sind, und mit dem Rad (R1) über Kugelgelenke (302, 303) verbunden sind, wobei die Kugelgelenke die Lenkachse definieren.

## Revendications

1. Système de direction pour les roues avant (R, R1) d'un véhicule automobile comportant une seule roue avant directrice, comprenant : un guidon (12) : un élément de support (10A ; 110) pour la roue avant : une suspension (1, 7, 101, 201) à laquelle ledit élément de support (10A : 110) est articulé de manière à pouvoir pivoter autour d'un axe de direction : et un ensemble de liaison (16, 18, 20) reliant ledit guidon (12) audit élément de support (10A), ledit ensemble de liaison comprenant une barre de commande (18), dont une première extrémité est articulée audit guidon (12) à l'aide d'un joint du type Hook ou équivalent (20), et une tige de liaison (16) possédant un axe longitudinal (A-A), et dont une première extrémité est articulée par l'intermédiaire d'un premier pivot (22), qui possède un axe transversal par rapport au plan médian vertical de la roue (R : R1), à une seconde extrémité de ladite barre de commande (18), la seconde extrémité de ladite tige de liaison (16) étant raccordée audit élément de support (10A : 110) par l'intermédiaire d'un second pivot (24) possédant un axe transversal au plan médian vertical de la roue (R : R1) : caractérisé en ce que ledit premier pivot (22) et ledit second pivot (24) sont mutuellement raccordés par ladite tige de liaison (16) de telle sorte que pendant le braquage, les axes desdits pivots peuvent osciller l'un par rapport à l'autre autour d'un axe qui s'étend essentiellement parallèlement à l'axe longitudinal (A-A) de ladite tige de liaison (16).

2. Système de direction selon la revendication 1, caractérisé en ce que ladite tige de liaison (16) est formée de deux parties raccordées axialement, qui sont libres de se déplacer angulairement l'une par rapport à l'autre autour d'un axe parallèle à l'axe de la tige de liaison, et en ce que la première partie de ladite tige de liaison est articulée à ladite barre de commande (18) et en ce que la seconde partie est articulée audit élément de support (10A ; 110).

3. Système de direction selon la revendication 2, caractérisé en ce que lesdites deux parties de ladite tige de liaison (16) sont coaxiales.

4. Système de direction selon la revendication 1, caractérisé en ce que la première extrémité de ladite tige de liaison (16) est articulée sur ladite barre de commande (18) par l'intermédiaire d'un joint du type Hook formant ledit premier pivot (22).

5. Système de direction selon la revendication 1, caractérisé en ce que la seconde extrémité de ladite tige de liaison (16) est articulée sur ledit élément de support (10A ; 110) par l'intermédiaire d'un joint du type Hook formant ledit second pivot (24).

6. Système de direction selon une ou plusieurs des revendications précédentes, caractérisé en ce que ladite barre de commande (18) est plus longue que ladite tige de liaison (16).

7. Système de direction selon une ou plusieurs des revendications précédentes, caractérisé en ce que la tige de liaison (16) est dirigée vers l'avant, l'extrémité pivotant sur la barre de commande (18) étant située plus en avant, dans le sens d'avance dudit véhicule automobile, que l'extrémité pivotant sur l'élément de support (10A ; 110).

8. Système de direction selon une ou plusieurs des revendications précédentes, caractérisé en ce que le volant (R ; R1) est supporté par au moins un bras de suspension oscillant (1 ; 101) pivotant sur le cadre (3 ; 203) autour d'un axe transversal (X-X) qui s'étend vers l'avant et est situé latéralement par rapport à la roue avant (R ; R1), ledit bras oscillant (1 ; 101) supportant un pivot (9 ; 301) sur lequel pivote le pivot (10) de la roue (R ; R1).

9. Système de direction selon la revendication 8, caractérisé en ce que ladite roue (R1) est supportée par deux bras oscillants (101, 201) articulés sur le cadre (203) et ce sur des pivots cylindriques (305, 307) possédant des axes essentiellement transversaux, et sont articulés sur la roue (R1) au niveau de joints à billes (301, 303), lesdits joints à billes définissant l'axe de direction.
